# EUROPEAN PATENT SPECIFICATION

(11) **EP 1 090 491 B1**
(45) Date of publication and mention of the grant of the patent: **04.10.2006**
(21) Application number: 00920723.4
(22) Date of filing: 17.04.2000
(51) Int. Cl.: H04L 29/06, H04N 7/24

(54) **PREPROCESSING METHOD FOR ADAPTING MPEG-4 DATA STREAMS TO THE INTERNET NETWORK**
VORVERARBEITUNGSVERFAHREN ZUM ANPASSEN VON MPEG-4 DATENSTRÖMEN AN DAS INTERNETNETZWERK
PROCEDE DE PRETRAITEMENT PERMETTANT D'ADAPTER DES TRAINS DE DONNEES MPEG-4 AU RESEAU INTERNET

(30) Priority: 20.04.1999 EP 99400961
(43) Date of publication of application: 11.04.2001
(73) Proprietor: Koninklijke Philips Electronics N.V., 5621 BA Eindhoven (NL)
(72) Inventor: HERRMANN, Laurent, NL-5656 AA Eindhoven (NL)
(74) Representative: Landousy, Christian
(86) International application number: PCT/EP2000/003525
(87) International publication number: WO 2000/064119

(56) References cited:
- WO-A-97/22201
- BASSO A ET AL: "Real-time MPEG-2 delivery based on RTP: Implementation issues" SIGNAL PROCESSING. IMAGE COMMUNICATION,NL,ELSEVIER SCIENCE PUBLISHERS, AMSTERDAM, vol. 15, no. 1-2, September 1999 (1999-09), pages 165-178, XP004180643 ISSN: 0923-5965
- BERTOGLIO L ET AL: "Intermedia synchronization for videoconference over IP" SIGNAL PROCESSING. IMAGE COMMUNICATION,NL,ELSEVIER SCIENCE PUBLISHERS, AMSTERDAM, vol. 15, no. 1-2, September 1999 (1999-09), pages 149-164, XP004180642 ISSN: 0923-5965
- ISHIBASHI Y ET AL: "EFFECTS OF TRANSPORT PROTOCOLS ON MEDIA SYNCHRONIZATION QUALITY" IEEE GLOBAL TELECOMMUNICATIONS CONFERENCE,US,NEW YORK, NY: IEEE, 1998, pages 720-727, XP000825852 ISBN: 0-7803-4985-7
- D. HOFFMAN, G. FERNANDO, V. GOYAL: "RTP payload format for MPEG2/MPEG2 video" NETWORK WORKING GROUP - REQUEST FOR COMMENTS 2038, [Online] 1 October 1996 (1996-10-01), XP002144280 Retrieved from the Internet: <URL:ftp://ftp.isi.edu/in-notes/frc2038.tx t> [retrieved on 2000-08-04]

## Description

The present invention relates to a preprocessing method for adapting digital data streams such as MPEG-4 ones to the so-called real time protocol (RTP) used by the "Internet" network.

Multimedia streaming over the internet network is now a daily reality. Services related to this domain are numerous: electronic commerce, interactive games, video on demand, on so on. MPEG-4, described for instance in "Overview of the MPEG-4 Version 1 Standard", ISO/IEC-JTC1/SC29/WG11-N1909, October 1997, and in "MPEG-4 Systems", ISO/IEC-JTC1/SC29/WG11-N1901, November 1997, is a standard for the coding of natural and synthetic audio-visual data in the form of audiovisual objects that are arranged into an audiovisual scene by means of a scene description. The advantages of this MPEG-4 standard in the context of the Internet network are various (excellent picture quality at low bitrates, high interactivity possibilities, ability to mix bi- and tri-dimensional representations,...).

The protocol RTP is adapted to the transmission of multimedia data, especially data that have real-time constrains such as audio or video. The document "RTP payload format for MPEG1/MPEG2 video" by D. Hoffman et al., which is a Request for Comments, number 2038, in the Network Working Group, describes a packetization scheme for MPEG video and audio streams. The scheme proposed can be used to transport such a video or audio flow over the transport protocols supported by RTP. Because of the range of applications that might employ MPEG streams, the authors propose to define two payload formats.

MPEG has also defined an interface to underling network technologies: the Synchronization Layer (SL). However, direct mapping from SL-packets to RTP packets is not easy, mainly due to the difference of complexity between the two formats.

It is therefore the object of the invention to propose a very simple way to adapt SL-packet to RTP packets by selecting in the SL-header the information that can be used by the RTP protocol.

To this end the invention provides a preprocessing method as defined in claim 1, which is appended to the description.

The invention will now be described in a more detailed manner, with reference to the accompanying drawings in which :
Fig.1 shows a header for an RTP data packet;
Fig.2 illustrates the protocol stack for using MPEG-4 over RTP structure.

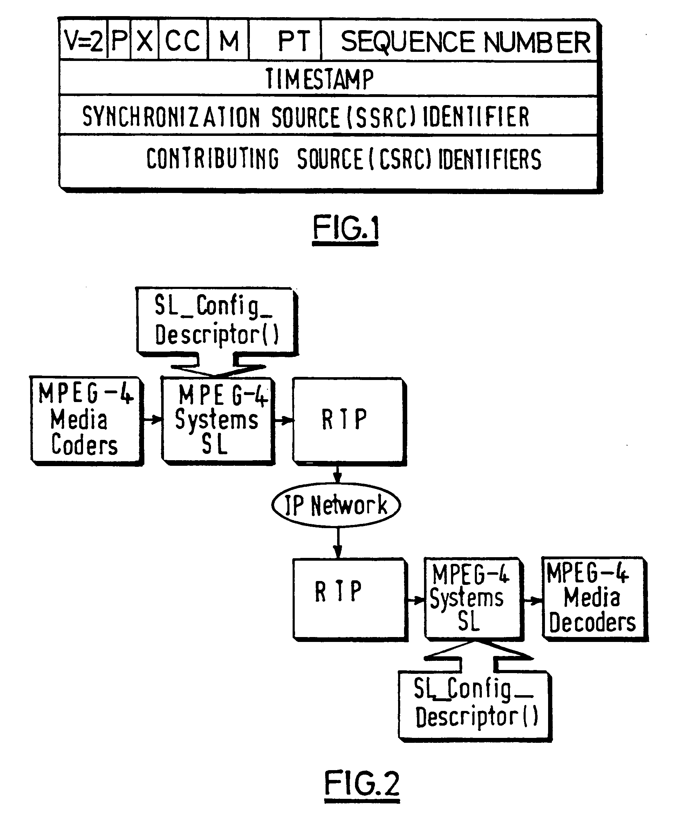

According to the general RTP specification, RTP data packets consist of a 12-byte fixed header (see Fig.1). This header is followed by a variable optional part and the payload (video frames, audio samples). On the other hand, the MPEG-4 SL packet header format can be found in MPEG-4 specifications. If one considers an MPEG-4 implementation for IP networks, the system structure can be presented as indicated in Fig.2. The SL layer is the interface between MPEG-4 media layers and the RTP stack. Then, the SL layer has to be configured to convey properly the SL information through the network. Different propositions have already been made. What is proposed here is to specify a reduced SL header format that will fit to the RTP header.

The RTP header fields that can be common to the SL header specifications are :
a) Padding (1)
b) Marker (1)
c) Sequence Number (16)
d) Time Stamp (32)

Then, using the fields that are common in RTP and SL headers as mentioned above, and regarding the protocol stack of Fig.2, the semantic would be as in Table 1, giving the semantic structure for SL/RTP mapping :

| Comment | RTP Header | SL-packet Header | SL_Config_descriptor | Semantic |
|---|---|---|---|---|
| | Field | Field | Field | |
| RTP allows to | Padding (1) | -PaddingFlag | UsePaddingFlag | The use of Padding |
| transmit padding | | PaddingBits | =1 | should be restricted |
| information to align payload to data blocks. MPEG-4 padding is designed for byte alignment or to transmit padding bytes only. | | = 0 | | to the transmission of padding bytes only |
| The RTP marker is used for delimiting | Marker (1) | AccessUnitStartFlag | Use AccessUnitStartFlag | The Marker should correspond to the |
| frames boundaries. This bit could by mapped in MPEG-4 terminology to the start or the end of an Access unit or a Random Access Point. | | | = 1 | accessUnitStartFlag since, in the SL, timestamp and sequence number are assigned to AU and not packets. It is needed to mark the start of an AU. |
| In both RTP and SL | Sequence | PacketSeqNum | PacketSeqNumLength | The length of the |
| specifications the sequence number is used for re-ordering purpose and packet loss detection. | Number (16) | | =16 | sequence number should be limited to 16 bits to fit RTP requirements. |
| Only one timestamp | TimeStamp | DecodingTimeStamp | UseTimeStampFlag | To be able to |
| is conveyed in RTP | (32) | Composition | = 1 | transport both SL |
| while decoding, and composition | | Timestamp | TimeStampResolution TimeStampLength | timestamps, the RTP timestamp |
| timestamps are possible in the SL. | | | = 16 | (coded on 32 bits) should be split in two parts to be able to map SL decoding and composition timestamps (that should be coded on 16 bits) |

This very simple and efficient way to map MPEG-4 SL packets to RTP packets is based on the fact that one has defined a SL_Config_Descriptor structure that forces to reduce the SL header to what values can be stored in RTP header fields, thus defining the semantic of the RTP fields according to the MPEG-4 SL data that are carried in the packets :
a) Padding flag will mean that the packet is only made of padding data ;
b) Marker bit is indicating the start of an Access Unit ;
c) Sequence Number is coded on 16 bits to respect RTP header specification and according to MPEG-4 that allows variable length of the SL fields ;
d) Time Stamp field of the RTP packet conveys the two SL header time stamps (decoding and compositions). Each SL time stamp is coded on 16 bits and concatenated to form the TimeStamp of RTP which is coded on 32 bits.

What is additional, in the case of the present invention, is the need for the definition of an RTP payload type to refer to MPEG-4 streams (as usual for other data types to be transported by RTP). To preserve SL full header, the optional "extension fields" of the RTP header could be used to carry the information that are not present in the classic RTP header, with a main drawback : overhead bytes.

## Claims

1. A preprocessing method for adapting MPEG-4 digital data streams to the so-called real time protocol RTP used by the "Internet" network, the preprocessing method comprising the step of:
- forming a synchronization layer SL, which constitutes an interface between MPEG-4 media layers and a real time protocol RTP stack, and the preprocessing method comprising the step of:
- specifying a reduced synchronization layer SL header format that has a one-to-one correspondence with a selection of fields from a real time protocol RTP header.

2. A method according to claim 1, comprising the step of:
- forming the reduced synchronization layer SL header format on the basis of the following fields of the real time protocol RTP header: Padding, Marker, Sequence Number, and Time Stamp.

3. A method according to claim 2, comprising the steps of:
a) Assigning a value to the Padding field that indicates whether a packet, which is associated with the real time protocol RTP header, is only made of padding data or not;
b) Assigning a value to the Marker field that indicates whether the packet comprises the start of an Access Unit or not;
c) Coding the Sequence Number field on 16 bits according to MPEG-4 specifications;
d) Coding the Time Stamp field so that this field is a concatenation of a decoding time stamp and a composition time stamp from the synchronization layer SL, each of the aforementioned time stamps being coded on 16 bits.

## Patentansprüche

1. Vorverarbeitungsverfahren zum Anpassen von MPEG-4 digitalen Datenströmen an das sog. Echtzeitprotokoll RTP, das von dem "Internet"-Netzwerk angewandt wird, wobei das Vorverarbeitungsverfahren den nachfolgenden Verfahrensschritt umfasst:
- das Bilden einer Synchronisationsschicht SL, die eine Schnittstelle zwischen MPEG-4 Mediaschichten und einem Echtzeitprotokollstapel RTP bildet,
wobei das Vorverarbeitungsverfahren den nachfolgenden Verfahrensschritt umfasst:
- das Spezifizieren eines reduzierten Kopfformats einer Synchronisationsschicht SL, das eine eins-zu-eins-Übereinstimmung mit einer Selektion von Feldern von einem Kopf eines Echtzeitprotokolls RTP hat.

2. Verfahren nach Anspruch 1, das den nachfolgenden Verfahrensschritt umfasst:
- das Bilden des reduzierten Kopfformats der Synchronisationsschicht auf Basis der nachfolgenden Felder des Kopfes des Echtzeitprotokolls RTP: Polsterung, Markierung, Sequenznummer und Zeitmarkierung.

3. Verfahren nach Anspruch 2, das die nachfolgenden Verfahrensschritte umfasst:
a) das Zuordnen eines Wertes zu dem Polsterungsfeld, der angibt, ob ein Paket, das mit dem Kopf des Echtzeitprotokolls RTP assoziiert ist, nur aus Polsterdaten besteht oder nicht;
b) das Zuordnen eines Wertes zu dem Markierungsfeld, der angibt, ob das Paket den Start einer Zugriffseinheit enthält oder nicht;
c) das Codieren des Sequenznummerfeldes mit 16 Bits entsprechend MPEG-4 Spezifikationen;
d) das Codieren des Zeitmarkierungsfeldes, so dass dieses Feld eine Verkettung einer Decodierzeitmarkierung und einer Zusammensetzungszeitmarkierung von der Synchronisationsschicht SL ist, wobei jede der oben genannten Zeitmarkierungen mit 16 Bits codiert ist.

## Revendications

1. Procédé de prétraitement permettant d'adapter des flux de données numériques MPEG-4 au protocole dit en temps réel RTP utilisé par le réseau "Internet", le procédé de prétraitement comprenant l'étape suivante :
- la formation d'une couche de synchronisation SL, qui forme une interface entre des couches média MPEG-4 et une pile de protocoles en temps réel RTP ; et le procédé de prétraitement comprenant l'étape suivante :
- la spécification d'un format d'en-tête de couche de synchronisation SL réduit qui présente une correspondance biunivoque avec une sélection de champs provenant d'un en-tête de protocole en temps réel RTP.

2. Procédé suivant la revendication 1, comprenant l'étape suivante :
- la formation du format d'en-tête de couche de synchronisation SL réduit sur la base des champs suivants de l'en-tête de protocole en temps réel RTP : remplissage, marqueur, numéro de séquence et horodateur.

3. Procédé suivant la revendication 2, comprenant les étapes suivantes :
a) l'attribution d'une valeur au champ remplissage qui indique si un paquet, qui est associé à l'en-tête de protocole en temps réel RTP, est composé uniquement de données de remplissage ou non ;
b) l'attribution d'une valeur au champ marqueur qui indique si le paquet comprend ou non le début d'une unité d'accès ;
c) le codage du champ numéro de séquence sur 16 bits selon les spécifications MPEG-4 ;
d) le codage du champ horodateur de sorte que ce champ est un enchaînement d'un horodateur de décodage et d'un horodateur de composition provenant de la couche de synchronisation SL, chacun des horodateurs mentionnés étant codé sur 16 bits.
